# EUROPÄISCHE PATENTANMELDUNG

(11) **EP 2 799 176 A1**
(43) Veröffentlichungstag der Anmeldung: **05.11.2014**
(21) Anmeldenummer: 13165893.2
(22) Anmeldetag: 30.04.2013
(51) Int. Cl.: B23D 61/02

(54) **Trennscheiben mit Sandwichbauweise**

(71) Anmelder: HILTI Aktiengesellschaft, 9494 Schaan (LI)
(72) Erfinder: Doberenz, Sabine, 89331 Burgau (DE); Spangenberg, Rolf, 82131 Gauting (DE)
(74) Vertreter: Hilti Aktiengesellschaft Corporate Intellectual Property

(57) **Zusammenfassung**

Trennscheibe (1) zum Bearbeiten eines Werkstückes, insbesondere eines metallischen oder mineralischen Untergrunds, welche ein Stammblatt (10) mit einer Anzahl an Zähnen (18), welche entlang des Kreisumfangs des Stammblattes (10) positioniert sind, und einem zentrischen Aufnahmeelement (19) zum Halten der Trennscheibe (1) in einer Haltevorrichtung einer Werkzeugmaschine, beispielsweise ein Trennschleifer, enthält. Das Stammblatt (10) enthält eine erste Stammblattkomponente (12) mit einer ersten Oberfläche (12a) und einer zweiten Oberfläche (12b) sowie eine zweite Stammblattkomponente (14) mit einer ersten Oberfläche (14a) und einer zweiten Oberfläche (14b).

## Beschreibung

### EINLEITUNG

Die vorliegende Erfindung betrifft eine Trennscheibe zum Bearbeiten eines Werkstückes, insbesondere eines metallischen oder mineralischen Untergrunds. Die Trennscheibe enthält ein Stammblatt mit einer Anzahl an Zähnen, welche entlang des Kreisumfangs des Stammblattes positioniert sind, und einem zentrischen Aufnahmeelement zum Halten der Trennscheibe in einer Haltevorrichtung einer Werkzeugmaschine, beispielsweise ein Trennschleifer.

Trennscheiben oder auch Sägeblätter der vorstehend beschriebenen Art sind allgemein bekannt und dienen vorwiegend zum Bearbeiten, d.h. Durchtrennen oder Schneiden, von verschiedenen Werkstoffen beispielsweise aus metallischen, mineralischen Materialien sowie verschiedenen Kunststoffen oder Hölzern.

Eine derartige Trennscheibe bzw. Sägeblatt für Kreissägen ist insbesondere in der PCT-Patentanmeldung WO 80/00320 offenbart. Dieses Sägeblatt weist dabei zwei Stahlscheiben auf, an deren Kreisumfang eine Vielzahl an Schneidelemente befestigt ist. Um die Schwingungs-und Geräuschdämpfungseigenschaften beim Gebrauch des Sägeblatts (d.h. beim Schneidevorgang) zu bessern, ist zwischen den Stahlscheiben eine Zwischenlage aus energieabsorbierendem und lötbaren Werkstoff angeordnet. Diese Zwischenlage ist dabei insbesondere in Form eines Laminats oder eines dünnen Blechs ausgebildet. Darüber hinaus sind die Stahlscheiben des Sägeblatts durch eine Vielzahl von punktförmigen Lötverbindungen bzw. Lötstellen miteinander verbunden.

Nachteilig an diesen Trennscheiben bzw. Sägeblättern des Stands der Technik ist, dass trotz aller Massnahmen zur Reduzierung der unerwünschten Schwingungs- und Geräuschentwicklung die Trennscheiben bzw. Sägeblätter während des Gebrauchs weiterhin äusserst laut sind sowie stark vibrieren. Besonders hoch ist dabei diese Schwingungs- und Geräuschentwicklung, wenn es sich speziell um dünne Trennscheiben bzw. Sägeblättern handelt.

Aufgabe der vorliegenden Erfindung ist daher das Bereitstellen einer Trennscheibe zum Bearbeiten eines Werkstückes, welche die oben genannten Nachteile beseitigt. Darüber hinaus sollen Schwingungs- und Geräuschentwicklungen während des Gebrauchs einer relativ dünnen Trennscheibe reduziert werden.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängen Ansprüchen beschrieben.

Demnach wird eine Trennscheibe zum Bearbeiten eines Werkstückes, insbesondere eines metallischen oder mineralischen Untergrunds, bereitgestellt, welche ein Stammblatt mit einer Anzahl an Zähnen, welche entlang des Kreisumfangs des Stammblattes positioniert sind, und einem zentrischen Aufnahmeelement zum Halten der Trennscheibe in einer Haltevorrichtung einer Werkzeugmaschine, beispielsweise ein Trennschleifer, enthält.

Erfindungsgemäss enthält das Stammblatt eine erste Stammblattkomponente mit einer ersten Oberfläche und einer zweiten Oberfläche sowie eine zweite Stammblattkomponente mit einer ersten Oberfläche und einer zweiten Oberfläche.

Gemäss einer vorteilhaften Ausgestaltungsform der vorliegenden Erfindung kann vorgesehen sein, dass die erste Stammblattkomponente und die zweite Stammblattkomponente mittels einer Loch-Stift-Vorrichtung miteinander verbindbar sind, wodurch eine besondere effektive Verbindung zwischen der ersten Stammblattkomponente und der zweiten Stammblattkomponente geschaffen ist.

Darüber hinaus ist es möglich, dass die Loch-Stift-Vorrichtung wenigstens ein Lochelement sowie wenigstens ein Stiftelement enthält. Das Lochelement ist dabei so ausgestaltet, dass es das Stiftelement aufnehmen kann. Es ist dabei auch möglich, dass das Stiftelement ein Übermass aufweist, damit das Stiftelement durch eine Übermasspassung in das Lochelement eingepasst werden kann.

Für eine besonders effektive und stabile Verbindung zwischen der ersten Stammblattkomponente und der zweiten Stammblattkomponente kann vorgesehen sein, dass wenigstens ein Lochelement an der ersten Stammblattkomponente sowie wenigstens ein Lochelement an der zweiten Stammblattkomponente und wenigstens ein Stiftelement an der ersten Stammblattkomponente sowie wenigstens ein Stiftelement an der zweiten Stammblattkomponente positioniert ist.

Entsprechend einer weiteren vorteilhaften Ausgestaltungsform der vorliegenden Erfindung kann das Lochelement ein an der gegenüberliegenden Oberfläche positioniertes Sackloch aufweisen. Um das Stiftelement formschlüssig in dem Sackloch zu positionieren, dass es vorteilhaft sein, dass das Sackloch einen zu dem Stiftelement korrespondierenden Querschnitt aufweist.

Gemäss einer weiteren möglichen Ausgestaltungsform kann wenigstens die erste Stammblattkomponente oder die zweite Stammblattkomponente wenigstens ein Einfügeelement aufweisen. Das Einfügeelement dient insbesondere der weiteren Erhöhung der Stabilität der Trennscheibe sowie der effektiven Reduzierung des Lärms während des Gebrauchs der Trennscheibe.

Es ist des Weiteren möglich, dass das Einfügeelement im Wesentlichen in Form eines Kranzes ausgebildet ist.

Um die Haftung zwischen der ersten Stammblattkomponente und der zweiten Stammblattkomponente weiter zu erhöhen und insbesondere um eine schwingungsreduzierende Schicht in dem Stammblatt unterzubringen, kann vorgesehen sein, dass zwischen der ersten Stammblattkomponente und der zweiten Stammblattkomponente eine Klebeschicht positioniert ist. Hierdurch kann effektiv die Stabilität des Stammblatts erhöht und die Schwingungs- und Geräuschentwicklung reduziert werden.

Entsprechend einer weiteren vorteilhaften Ausgestaltungsform der vorliegenden Erfindung kann zwischen dem Einfügeelement und der daran angrenzenden ersten Stammblattkomponente oder zweiten Stammblattkomponente eine Klebeschicht positioniert sein. Hierdurch kann sowohl die Haftung zwischen dem Einfügeelement und der daran angrenzenden ersten Stammblattkomponente oder zweiten Stammblattkomponente erhöht werden als auch die die Schwingungs- und Geräuschentwicklung zwischen dem Einfügeelement und der daran angrenzenden ersten Stammblattkomponente oder zweiten Stammblattkomponente reduziert werden.

Die vorliegende Erfindung wird bezüglich vorteilhafter Ausführungsbeispiele näher erläutert, hierbei zeigt
- Fig. 1: Frontansicht der erfindungsgemässen Trennscheibe mit einer Vielzahl an Zähnen entlang des Kreisumfangs des Stammblattes sowie einer Loch-Stift-Vorrichtung gemäß einer ersten Ausführungsform;
- Fig. 2: Schnittansicht der erfindungsgemässen Trennscheibe mit einer ersten und zweiten Stammblattkomponente gemäß der ersten Ausführungsform entlang der Schnittlinie A-A aus Fig. 1;
- Fig. 3: Perspektivische Schnittansicht der ersten und der zweiten Stammblattkomponente entlang der Schnittlinie B-B aus Fig. 1 sowie eine Detailansicht der Loch-Stift-Vorrichtung;
- Fig. 4: Perspektivische Schnittansicht der zweiten Stammblattkomponente entlang der Schnittlinie B-B aus Fig. 1 sowie eine Detailansicht der Loch-Stift-Vorrichtung;
- Fig. 5: Frontansicht der erfindungsgemässen Trennscheibe mit einem Einfügeelement gemäß einer zweiten Ausführungsform;
- Fig. 6: Frontansicht der erfindungsgemässen Trennscheibe mit einem Einfügeelement gemäß einer dritten Ausführungsform;
- Fig. 7: Frontansicht der erfindungsgemässen Trennscheibe mit einem Einfügeelement gemäß einer vierten Ausführungsform;
- Fig. 8: Schnittansicht der erfindungsgemässen Trennscheibe mit dem Einfügeelement gemäß der zweiten Ausführungsform entlang der Schnittlinie C-C;
- Fig. 9: Schnittansicht der erfindungsgemässen Trennscheibe mit einer ersten und zweiten Stammblattkomponente gemäß einer weiteren Ausführungsform mit einer großflächigen Klebeschicht entlang der Schnittlinie A-A aus Fig. 1; und
- Fig. 10: Schnittansicht der erfindungsgemässen Trennscheibe mit einer ersten und zweiten Stammblattkomponente gemäß einer weiteren Ausführungsform mit einer punktuell aufgetragenen Klebeschicht entlang der Schnittlinie A-A aus Fig. 1.

### AUSFÜHRUNGSBEISPIELE

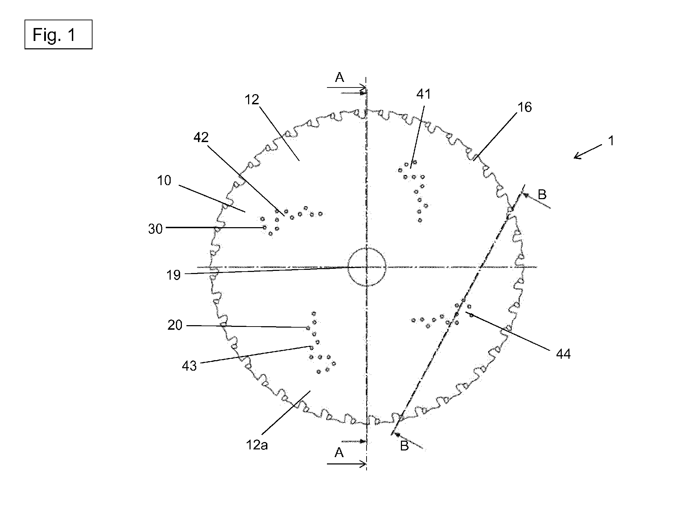

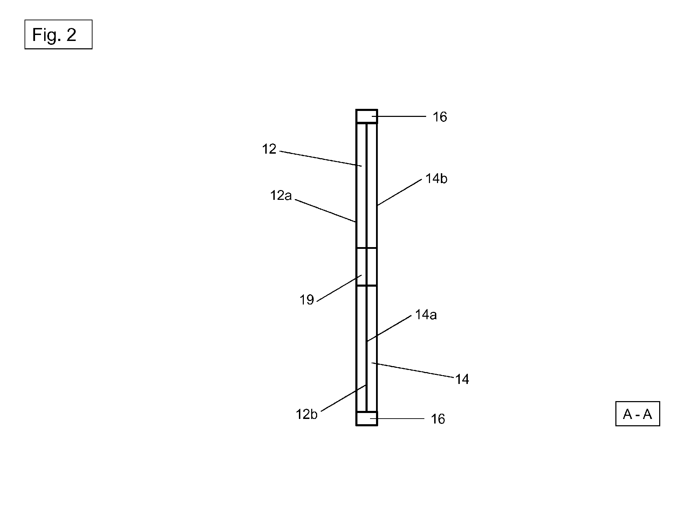

Fig. 1 und 2 zeigen eine erfindungsgemäße Trennscheibe 1 zum Bearbeiten eines (nicht gezeigten) Werkstückes, insbesondere eines metallischen oder mineralischen Untergrunds, wie z.B. Stein- oder Metallplatten, gemäß einer ersten Ausführungsform.

Die Trennscheibe 1 enthält ein Stammblatt 10, welches eine erste Stammblattkomponente 12, eine zweite Stammblattkomponente 14 sowie eine Loch-Stift-Vorrichtung 16 aufweist. Die erste Stammblattkomponente 12 weist eine erste Oberfläche 12a und eine zweite Oberfläche 12b auf und die zweite Stammblattkomponente 14 weist eine erste Oberfläche 14a und eine zweite Oberfläche 14b auf. Entlang des Kreisumfangs 17a der ersten Stammblattkomponente 12 und des Kreisumfangs 17b der zweiten Stammblattkomponente 14 befinden sich eine Anzahl an Schneidezähnen 18, welche gleichmässig beabstandet entlang des Kreisumfangs 17 des Stammblattes 10 positioniert sind.

Das Stammblatt 10 enthält des Weiteren ein zentrisches Aufnahmeelement 19 zum Halten der Trennscheibe 1 in einer (nicht gezeigten) Haltevorrichtung einer (nicht gezeigten) Werkzeugmaschine, beispielsweise ein Trennschleifer. Das zentrische Aufnahmeelement 19 ist in Form eines kreisförmigen Lochs. Es ist jedoch auch möglich, dass das zentrische Aufnahmeelement 19 jede andere geeignete Form aufweist.

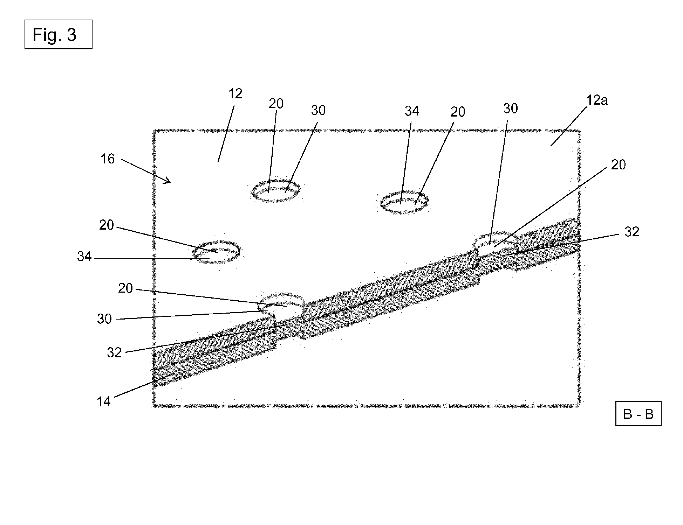

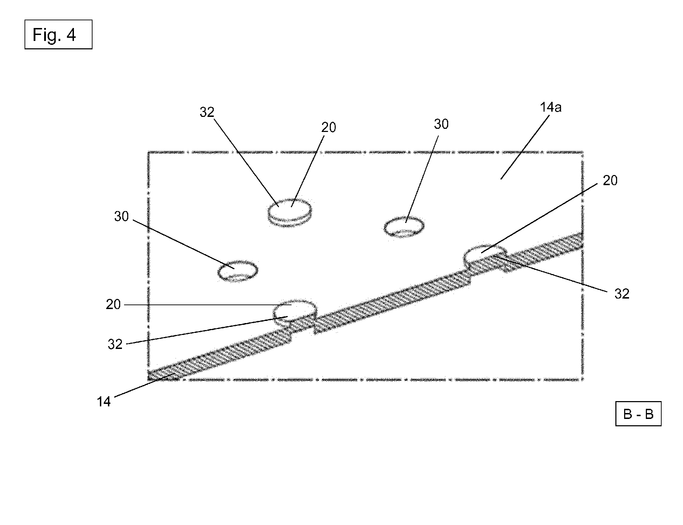

Wie in Fig. 3 und 4 gezeigt, enthält die Loch-Stift-Vorrichtung 16 eine Anzahl an Lochelementen 20 sowie eine Anzahl an Stiftelementen 30. Die Lochelemente 20 und die Stiftelemente 30 sind sowohl an der ersten Stammblattkomponente 12 als auch an der zweiten Stammblattkomponente 14 positioniert. Das Lochelement 20 besteht dabei aus einer kreisförmigen Aussparung 22. Das Stiftelement 30 enthält eine zylindrische Erhebung 32 sowie ein zylindrisches Sackloch 34. Das Sackloch 34 ist dabei auf der gegenüberliegenden Seite der zylindrischen Erhebung 32 positioniert. Das bedeutet, dass die zylindrische Erhebung 32 auf der ersten Oberfläche 12a der ersten Stammblattkomponente 12 und das zylindrische Sackloch 34 auf der zweiten Oberfläche 12b der ersten Stammblattkomponente 12 angeordnet sind. Ebenso, sind die zylindrische Erhebung 32 auf der ersten Oberfläche 14a der zweiten Stammblattkomponente 14 und das zylindrische Sackloch 34 auf der zweiten Oberfläche 14b der zweiten Stammblattkomponente 14 angeordnet. Wie in Fig. 3 gezeigt, liegen die zylindrische Erhebung 32 und das zylindrische Sackloch 34 dabei übereinander. Die Anordnung und Positionierung der Lochelemente 20 und der Stiftelemente 30 auf dem Stammblatt 10 ist dabei keinem bestimmten Muster und keiner bestimmten Ordnung unterworfen. Das bedeutet, dass die Anordnung und Positionierung der Lochelemente 20 und der Stiftelemente 30 auf dem Stammblatt 10 nach verschiedenen Geometrien erfolgt. Wie in Fig. 1 gezeigt, ist die Anordnung und Positionierung der Lochelemente 20 und der Stiftelemente 30 auf dem Stammblatt 10 in einer ersten Gruppe 41, zweiten Gruppe 42, dritten Gruppe 43 und vierten Gruppe 44 verwirklicht. Innerhalb der vier Gruppen 41, 42, 43, 44 sind die Lochelemente 20 und die Stiftelemente 30 nach einem einheitlichen Muster angeordnet, d.h. das Muster der Lochelemente 20 und der Stiftelemente 30 in jeder Gruppe 41, 42, 43, 44 ist identisch. Jedoch ist die Ausrichtung der Muster der Lochelemente 20 und der Stiftelemente 30 in jeder Gruppe 41, 42, 43, 44 unterschiedlich, d.h. zueinander in einem bestimmten Winkel verdreht.

Damit die erste Stammblattkomponente 12 an der zweiten Stammblattkomponente 14 haftet, sind die Ausgestaltungsformen sowie insbesondere die Durchmesser des Lochelements 20 sowie des Stiftelements 30 so gestaltet, dass das Lochelement 20 das Stiftelement 30 in sich formschlüssig aufnehmen kann. Der Durchmesser des Stiftelements 30 weist dabei ein Übermass zum Durchmesser des Lochelements 20 auf.

Wie in Fig. 2 dargestellt, liegen die erste Stammblattkomponente 12 und die zweite Stammblattkomponente 14 deckungsgleich aufeinander und bilden so zusammen das Stammblatt 10.

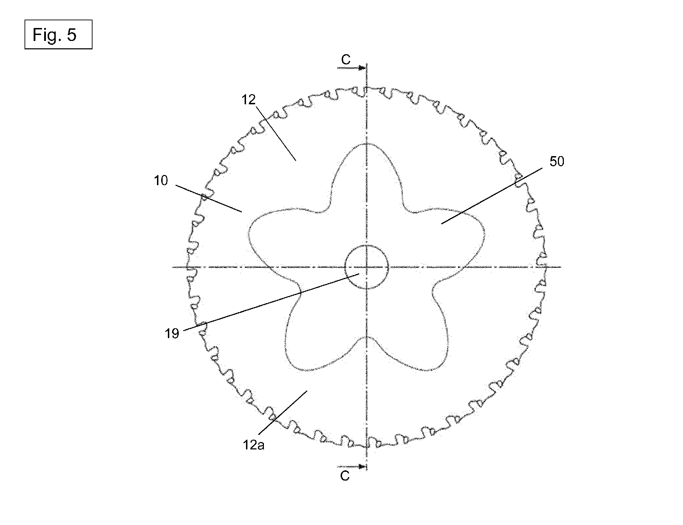

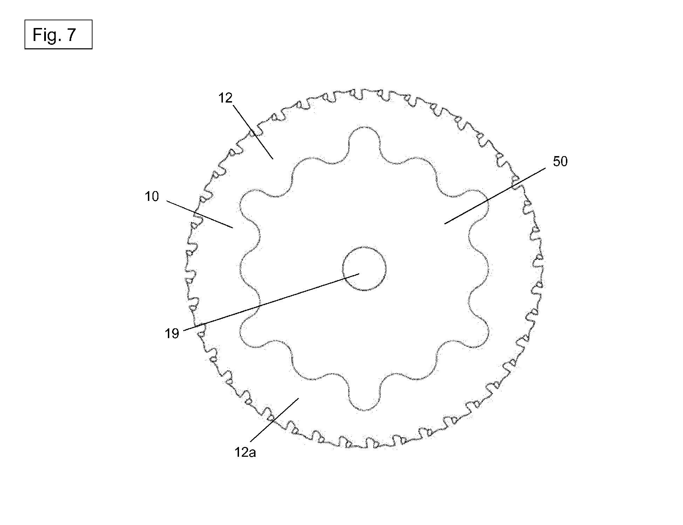

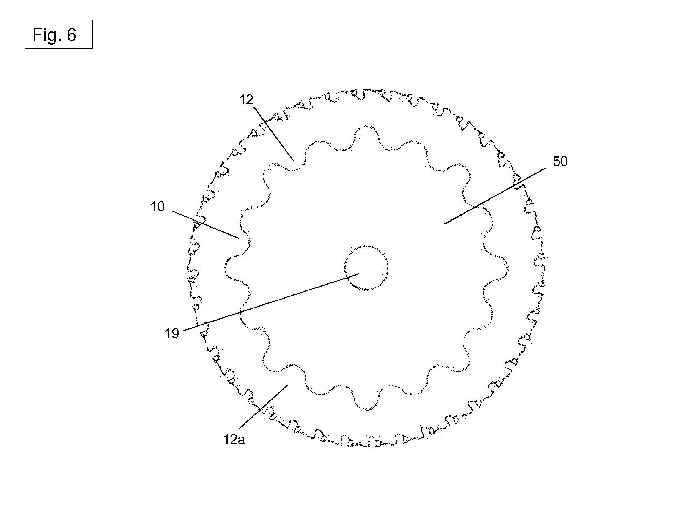

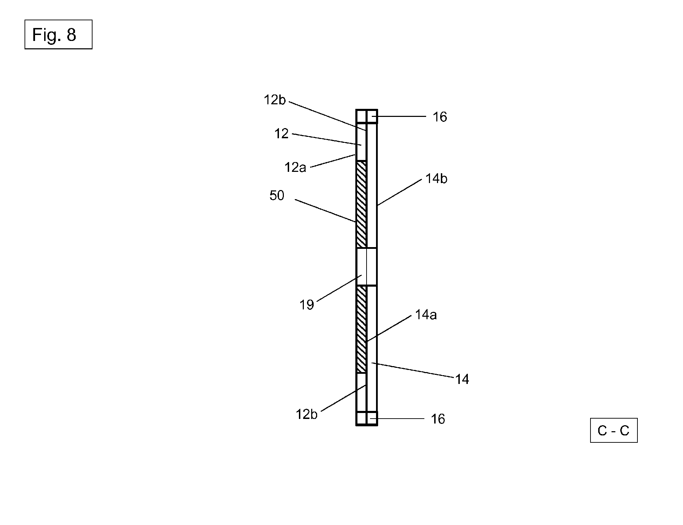

Gemäss eines weiteren Ausführungsbeispiels der vorliegenden Erfindung, wie in den Fig. 5 bis 8 dargestellt, ist ein Einfügeelement 50 in der ersten Stammblattkomponente 12 positioniert. Das Einfügeelement 50 ist gemäss einer ersten Ausgestaltung in Form eines Kranzes bzw. Ringes mit einem wellenförmigen Rand ausgebildet. Um das Einfügeelement 50 in der ersten Stammblattkomponente 12 zu positionieren, weist die erste Stammblattkomponente 12 eine zu der entsprechenden Form des Einfügeelements 50 korrespondierende Aussparung 52 auf, vgl. Fig. 8. Die Form des Einfügeelements 50 ist dabei jedoch nicht auf die in Fig. 5 bis 8 dargestellten Formen begrenzt, so dass das Einfügeelement 50 in allen geeigneten Formen verwirklicht sein kann. Alternativ kann das Einfügeelement 50 anstelle in der ersten Stammblattkomponente 12 auch in zweiten Stammblattkomponente 14 positioniert sein. Es ist des Weiteren auch möglich, dass jeweils ein Einfügeelement 50 in der ersten Stammblattkomponente 12 und in der zweiten Stammblattkomponente 14 eingefügt ist.

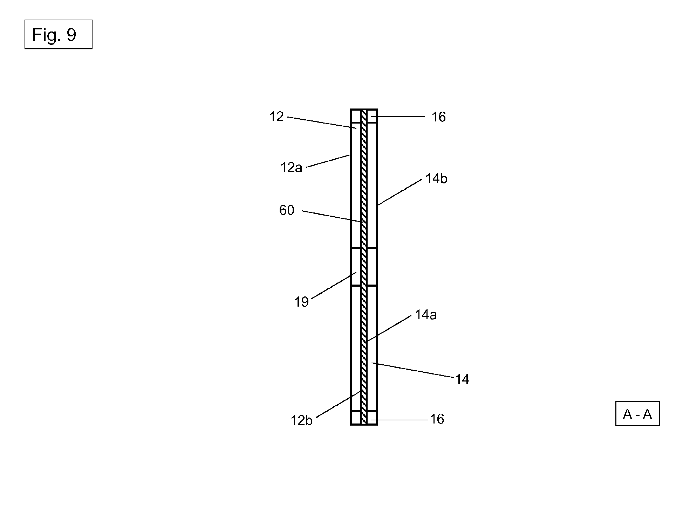

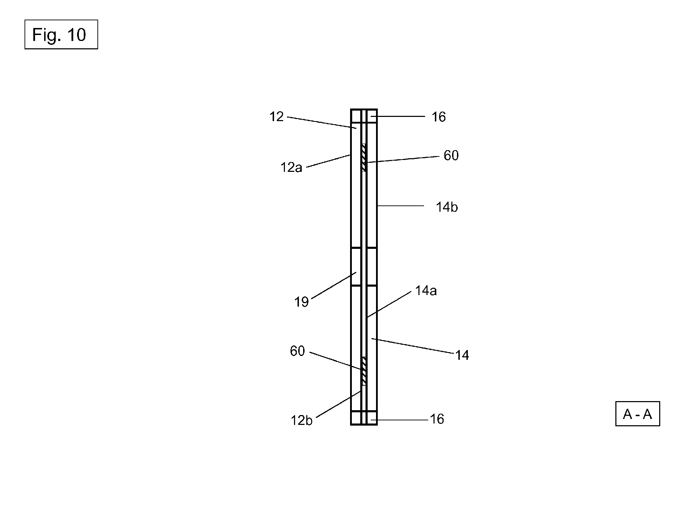

Gemäss eines weiteren Ausführungsbeispiels der vorliegenden Erfindung, wie in den Fig. 9 und 10 dargestellt, ist zwischen der ersten Stammblattkomponente 12 sowie der zweiten Stammblattkomponente 14 eine Klebeschicht 60 positioniert. Wie in Fig. 9 dargestellt, ist die Klebeschicht 60 gemäss einer ersten Ausgestaltung großflächig, d.h. nahezu vollständig auf den entsprechenden Oberflächen 12a, 12b, 14a, 14b der ersten und zweiten Stammblattkomponente 12, 14 aufgetragen. Gemäss einer weiteren Ausgestaltung ist, wie in Fig. 10 angedeutet, die Klebeschicht 60 lediglich punktuell zwischen der ersten und zweiten Stammblattkomponente 12, 14 aufgetragen.

Entsprechend weiterer Ausführungsbeispiele kann vorgesehen sein, dass die erfindungsgemässe Trennscheibe 1 die vorstehend beschriebene Loch-Stift-Vorrichtung 16 sowie die ebenfalls vorstehend beschriebene Klebeschicht 60 aufweist. Darüber hinaus ist es auch möglich, dass die erfindungsgemässe Trennscheibe 1 die Loch-Stift-Vorrichtung 16, die Klebeschicht 60 und wenigstens eines der ebenfalls vorstehend beschriebenen Einfügeelemente 50 aufweist. Alternativ dazu ist es ferner möglich, dass eine erfindungsgemässe Trennscheibe 1 lediglich die Klebeschicht 60 sowie wenigstens eines der Einfügeelemente 50 aufweist. Des Weiteren ist auch jede andere geeignete Kombination der Loch-Stift-Vorrichtung 16, der Klebeschicht 60 sowie des Einfügeelements 50 für die erfindungsgemässe Trennscheibe 1 möglich.

Durch die Merkmale der vorstehend beschriebenen Erfindung können Schwingungs- und Geräuschentwicklungen während des Gebrauchs der erfindungsgemässen Trennscheibe reduziert werden.

## Patentansprüche

1. Trennscheibe (1) zum Bearbeiten eines Werkstückes, insbesondere eines metallischen oder mineralischen Untergrunds, enthaltend
ein Stammblatt (10) mit einer Anzahl an Schneidezähnen (18), welche entlang des Kreisumfangs des Stammblattes (10) positioniert sind, und einem zentrischen Aufnahmeelement (19) zum Halten der Trennscheibe (1) in einer Haltevorrichtung einer Werkzeugmaschine, beispielsweise ein Trennschleifer,
**dadurch gekennzeichnet, dass** das Stammblatt (10) eine erste Stammblattkomponente (12) mit einer ersten Oberfläche (12a) und einer zweiten Oberfläche (12b) sowie eine zweite Stammblattkomponente (14) mit einer ersten Oberfläche (14a) und einer zweiten Oberfläche (14b) enthält.

2. Trennscheibe (1) nach Anspruch 1,
**dadurch gekennzeichnet, dass** die erste Stammblattkomponente (12) und die zweite Stammblattkomponente (14) mittels einer Loch-Stift-Vorrichtung (16) miteinander verbindbar sind.

3. Trennscheibe (1) nach Anspruch 2,
**dadurch gekennzeichnet, dass** die Loch-Stift-Vorrichtung (16) wenigstens ein Lochelement (20) sowie wenigstens ein Stiftelement (30) enthält.

4. Trennscheibe (1) nach Anspruch 3,
**dadurch gekennzeichnet, dass** wenigstens ein Lochelement (20) an der ersten Stammblattkomponente (12) sowie wenigstens ein Lochelement (20) an der zweiten Stammblattkomponente (14) und wenigstens ein Stiftelement (30) an der ersten Stammblattkomponente (12) sowie wenigstens ein Stiftelement (30) an der zweiten Stammblattkomponente (14) positioniert ist.

5. Trennscheibe (1) nach Anspruch 3 oder 4,
**dadurch gekennzeichnet, dass** das Lochelement (20) ein an der gegenüberliegenden Oberfläche positioniertes Sackloch (34) aufweist.

6. Trennscheibe (1) nach Anspruch 5,
**dadurch gekennzeichnet, dass** das Sackloch (34) einen zu dem Stiftelement (30) korrespondierenden Querschnitt aufweist.

7. Trennscheibe (1) nach wenigstens einem der Ansprüche 1 bis 6,
**dadurch gekennzeichnet, dass** wenigstens die erste Stammblattkomponente (12) oder die zweite Stammblattkomponente (14) wenigstens ein Einfügeelement (50) aufweist.

8. Trennscheibe (1) nach Anspruch 7,
**dadurch gekennzeichnet, dass** das Einfügeelement (50) im Wesentlichen in Form eines Kranzes ausgebildet ist.

9. Trennscheibe (1) nach wenigstens einem der Ansprüche 1 bis 8,
**dadurch gekennzeichnet, dass** zwischen der ersten Stammblattkomponente (12) und der zweiten Stammblattkomponente (14) eine Klebeschicht (60) positioniert ist.

10. Trennscheibe (1) nach Anspruch 7,
**dadurch gekennzeichnet, dass** zwischen dem Einfügeelement (50) und der daran angrenzenden ersten Stammblattkomponente (12) oder zweiten Stammblattkomponente (14) eine Klebeschicht (60) positioniert ist.
